# EUROPEAN PATENT APPLICATION

(11) **EP 0 608 453 A1**
(43) Date of publication of application: **03.08.1994**
(21) Application number: 93101235.5
(22) Date of filing: 28.01.1993
(51) Int. Cl.: B60Q 1/14

(54) **Device for switching full beam headlights to dipped beam, in particular for motor vehicles or the like**

(71) Applicant: Briata, Fulvio, I-15076 Ovada (IT); Arecco, Stefano, I-16156 Genova Pegli (IT)
(72) Inventor: Briata, Fulvio, I-15076 Ovada (IT); Arecco, Stefano, I-16156 Genova Pegli (IT)
(74) Representative: Porsia, Bruno

(57) **Abstract**

A device for switching full beam headlights to dipped beam, in particular for motor vehicles or the like, in which there is provided a manual switching unit with a switch (3) which connects an electric power source (5) alternately to a power supply line (101) for the full beam headlights (1) and to a power supply line (102) for the dipped beam headlights (2). According to the invention the device further comprises an automatic switching unit with directional brightness sensors (12) oriented towards the vehicles travelling in the opposite direction and supplying an electrical signal related to the brightness detected, as well as means (11; 36, 37, 38, 39) for processing the signal of the brightness sensors (12) and means (10, 7, 13, 106; 38, 39) for actuating additional switching means (6; 30, 32; 35) which deviate the electric power supply alternately from the power supply line (101, 101') of the full beam headlights (1) to that (102) of the dipped beam headlights (2) and vice versa, when a light source of predetermined brightness is detected or not detected by the brightness sensor (12), respectively.

## Description

The invention relates to a device for switching full beam headlights to dipped beam, in particular for motor vehicles or the like, in which there is provided a manual switching unit with a switch which connects an electric power source alternately to a power supply line for the full beam headlights and to a power supply line for the dipped beam headlights.

Manual switching represents a further distraction for the driver whilst driving and an additional operation which must be performed with a certain frequency when there is heavy oncoming traffic. When the route being followed is relatively demanding, the additional operation of switching over the full beam and dipped beam headlights has a negative effect on driving safety since it partially distracts the driver's attention from the road ahead, with a high risk of dazzling the drivers of oncoming vehicles.

The object of the invention therefore is to provide a device for switching full beam headlights to dipped beam, which is able to overcome said drawbacks, thus avoiding in a simple and effective manner and at very little cost the abovementioned dangers and freeing the driver from the onus of performing this additional operation, whilst nevertheless making it possible for switching to be performed manually and for the full beam headlights to be switched on even when the automatic device is activated.

The invention achieves the abovementioned object with a device for switching full beam headlights to dipped beam of the type described at the beginning and further comprising an automatic switching unit consisting of:
- directional brightness sensors oriented towards the vehicles travelling in the opposite direction and supplying an electrical signal related to the brightness detected;
- means for processing the signal generated by the brightness sensors and means for actuating additional switching means which deviate the electric power supply alternately from the power supply line of the full beam headlights to that of the dipped beam headlights and vice versa, when a light source of predetermined brightness strikes or does not strike the directional sensors, respectively.

According to an improvement, means are provided for coupling the two switching units together, the said means being designed so as to exclude or bypass the automatic switching unit when the manual unit or associated manually actuated switch is operated, both before and after the automatic unit itself is activated for switching over from full beam headlights to dipped beam headlights.

The switching means of the automatic switching unit may be operated alternately both by the processing and actuating means of the said unit and by the manual operating means of the manual unit.

The processing and actuating means of the automatic switching unit and the means for coupling the said unit to the manual unit may be of any type, for example of the electronic, electrical or electro-mechanical type.

With the switching device according to the invention it is thus possible to avoid manual switching of the full beam headlights to dipped beam each time an oncoming vehicle is encountered. The risk of dazzling the said vehicle is completely eliminated and the driver is able to concentrate exclusively on routine driving operations. Since the manual unit and the automatic unit are able to interact with each other, flashing of the lights may be performed for example or the full-beam headlights can be kept deliberately switched on where this is required, without any particular manoeuvres having to to be performed apart from normal operation of the manual controls. The design of the automatic unit is simple and safe and is such that it can also be incorporated into the electric power supply circuit of pre-existing headlights of the conventional type.

The invention also relates to other characteristic features which represent further improvements to the automatic switching device referred to above and which are described in the sub-claims.

The particular features of the invention and the advantages arising therefrom will emerge more clearly from the detailed description of a few preferred embodiments illustrated by way of a non-limiting example in the accompanying drawings, in which:
Figs 1 to 3 show a schematic view of a first embodiment of the switching device according to the invention, of the electromechanical type, respectively when no activating light source is present and when the said source is present without and with the intervention of manual switching;
Figs 4 to 6 show the diagram of a second embodiment of the invention of the electrical type, during the respective operative phases according to the preceding figures;
Fig. 7 shows the block diagram of a third embodiment of the device according to the invention, of the electronic type.

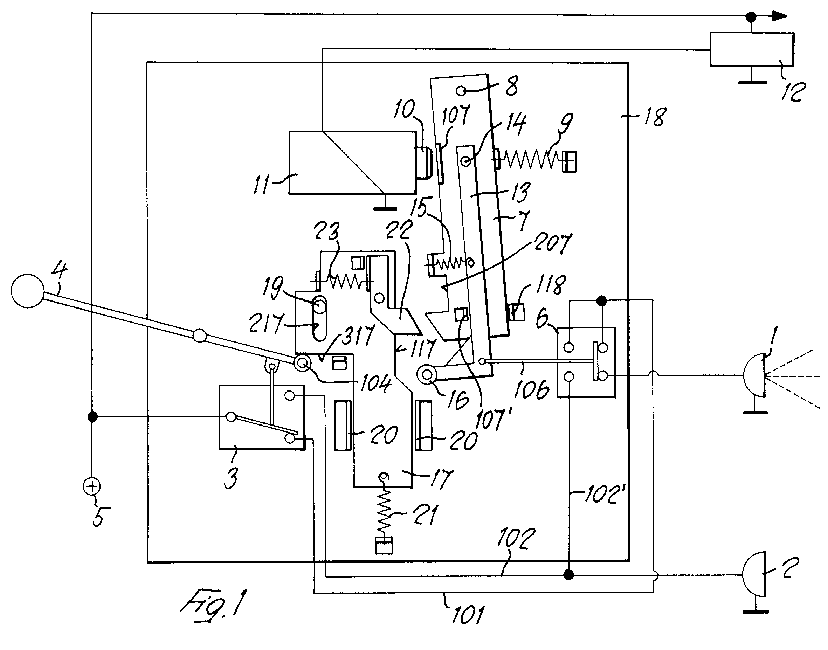

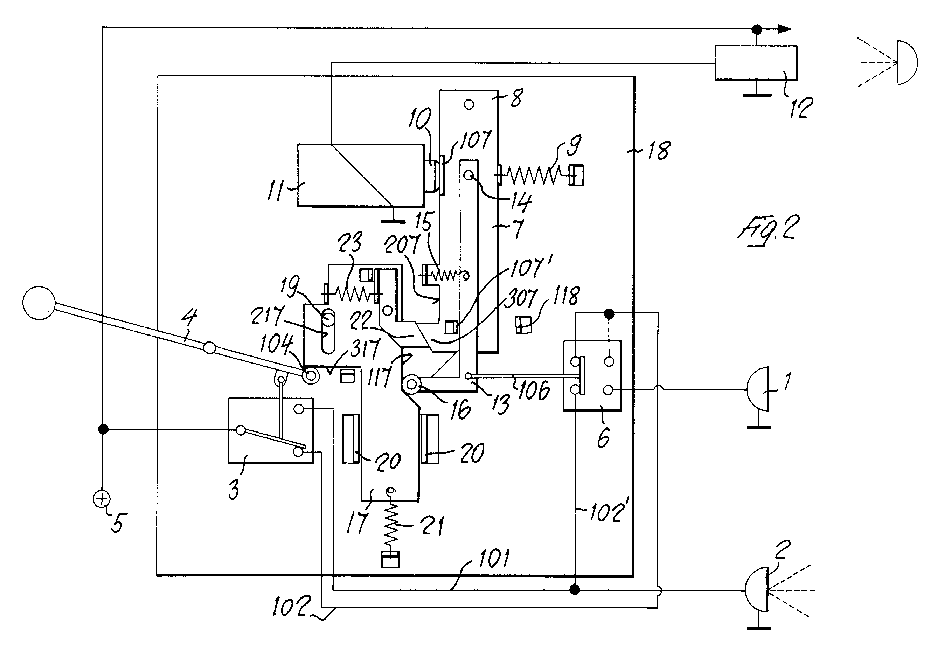

With reference to Figs 1 to 3, a device for switching full beam headlights 1 to dipped beam 2 comprises a manually operated switch 3 which is actuated by a switching lever 4 for alternately connecting the power supply line 101 for full beam headlights 1 and the power supply line 102 for dipped beam headlights 2 to a power source indicated as a whole by 5, in particular to the positive pole of the battery of a vehicle. The power supply line 101 for full beam headlights 1 incorporates an additional switch 6 which alternately connects the same power supply line 101 to the full beam headlights 1 or to the dipped beam headlights 2 via a branch 102' of the power supply line 102 for the dipped beam headlights 2 which is connected to one of the poles of the switch 6. The switch 6 is actuated mechanically by means of an actuating rod 106 which is connected to the free end of an oscillating lever 7. In the example illustrated, the said switch 6 is of the pushbutton type, so that axial displacement of the actuating rod caused by oscillation in either direction of the oscillating lever 7 results in switching between the condition where the power supply line 101 for the full beam headlights 1 is connected to the said headlights and the condition where the said power supply line 101 is alternately connected to the dipped beam headlights 2 via the branch 102'. The oscillating lever 7 is pivotably connected at 8, via its end opposite that associated with the actuating rod 106, to a base plate 18 and is permanently biased by elastic means 9, a spring, or the like, against a projecting stop 118, so that the actuating rod 106 is pressed into the position where the switch 6 is switched and the full beam headlights 1 are connected to the power supply line 101. This switching position represents the stable switching position. On the side of the oscillating lever 7 opposite that where the switch 6 is located, i.e. facing the direction in which the actuating lever 106 of the said switch is extracted, the magnetic element 10 of an electromagnet is supported on the base plate 18. The electromagnet forms part of a processing and command circuit which is not illustrated in detail, but is indicated schematically by the block 11. The processing and command circuit 11 is connected to a brightness sensor 12. The brightness sensor 12 is of the directional type and is directed towards oncoming vehicles. It may consist of a photodiode, a phototransistor, a photoresistor or any other photoelectronic component. Both the processing and command circuit 11 and the sensor 12 are stably connected to the power supply 5. This connection may be activated automatically when the headlights or parking lights are switched on, and is independent of the type of headlight which is switched on. The processing and command circuit 11 may comprise a threshold circuit which controls a power stage for supplying power to the coils of the electromagnet incorporating the magnetic element 10. Each time the electrical signal emitted by the brightness sensor 12 exceeds a given threshold, the electromagnet is activated and cooperates with at least one ferromagnetic insert 107 of the oscillating lever 7, causing oscillation thereof in the direction of extraction of the actuating rod 106 and hence switching of the power supply line 101 to the branch 102' for the dipped beam headlights 2. As can be seen in Fig. 2, in this case, the full beam headlights 1 are automatically switched off and the dipped beam headlights 2 are switched on. When the signal of the brightness sensor 12 falls below the preset threshold value, the electromagnet is no longer supplied with power and the oscillating lever 7 is made to return by the elastic means 9 into the condition where the actuating rod 106 is compressed, namely the position in which the line 101 is switched to the full beam headlights 1, so that the initial condition is restored, in which the full beam headlights 1 are switched on and the dipped beam headlights 2 are switched off (Fig. 1).

According to an improvement, mechanical means for coupling the actuating rod 106 of the switch 6 to the actuating lever 4 of the manual switch 3 are provided. These coupling means enable automatic operation of the switch 6 to be bypassed and switching to be brought back under the direct manual control of the driver by means of the lever 4. This is advantageous for giving signals by flashing the lights or for keeping the full beam headlights switched on in special circumstances.

In the example illustrated, the actuating rod 106 of the switch 6 is fixed to the corner zone of an angled oscillating lever 13 which is pivotably connected, via its opposite end, at 14 to the oscillating lever 7 and oscillates parallel to the latter. The angled lever 13 is biased into a stable position, parallel to the oscillating lever 7 and against an end-of-travel stop 107', by a spring 15 located between the said two levers. The free end of the angled lever 13 projects in cantilever fashion beyond the corresponding end of the lever 7 and has mounted on it a roller 16 which cooperates with a linear cam track 117 of a cursor 17. The cursor 17 is guided in a sliding manner perpendicularly with respect to the actuating rod 106 of the switch 6 and parallel to the base plate 18 inside a lateral guide 20 and on a pin 19 of the base plate 18 which engages inside an eyelet 217 of the cursor 17 oriented in the direction of sliding of the latter. Displacement of the cursor 17 is effected by the actuating lever 4, the free end 104 of which cooperates in the manner of a thrust element with a transverse shoulder 317 of the cursor 17. Oscillation of the actuating lever 4 for manual switching from full beam headlights 1 to dipped headlights 2 thus causes a displacement of the cursor 17. The cursor 17 is biased into the position corresponding to the position of the actuating lever 4 for switching on the full beam headlights 1 (Figs 1 and 2) by an elastic element, a spring 21 located between the said cursor 17 and the base plate 18. The linear cam track 117 is provided on the side of the cursor facing the angled lever 13 and has an indented section which is connected to a further projecting section, and the two sections are joined together by an inclined section. When the full beam headlights 1 are switched on, the actuating lever 4 is in a position such that the roller 16 of the angled lever 13 cooperates with the indented section of the linear cam track 117. In this situation, when the oscillating lever is attracted by the magnetic element 10, the angled lever 13 maintains the stable position parallel to the said angled lever 13, enabling activation of the switch 6, so as to switch off the full beam headlights 1 and switch on the dipped beam headlights 2. Operation of the actuating lever 4 for the purpose of manual switching from the full beam headlights 1 to dipped beam headlights 2 (Fig. 3) causes sliding of the cursor 17 so that the angled lever 13 cooperates with the projecting section of the cam track 117. Therefore the angled lever 13 is displaced angularly with respect to the associated oscillating lever 7 and the actuating rod 106 of the switch 6 is again brought into the switching position in which the full beam headlights 1 are switched on and the dipped beam headlights 2 are switched off (Fig. 3).

According to a further characteristic feature, in order to exclude entirely control of the switch 6 by the automatic control unit consisting of the sensor 12, the processing and command circuit 11 and the oscillating lever 7, mutually engaging click-action means are provided between the oscillating lever 7 and the cursor 17, as a result of which the cursor 17 is held against the return spring 21 in the position in which the angled lever 13 cooperates with the section of the linear cam track 117 projecting towards it. In the example illustrated, these means consist of an oscillating engaging tooth 22 which is fixed to the cursor 17 and which cooperates with a facing insertion recess 207 in the oscillating lever 7. The engaging tooth 22 may be made to oscillate against the action of a spring 23 into an inwardly located position so as to be able to overcome a projection 307 of the oscillating lever 7 which laterally bounds the insertion recess 207, subsequently clicking into a stably engaged position inside the recess 207. Advantageously the cooperating end surfaces of the tooth 22 and of the projection 307 are inclined so as to facilitate oscillation of the tooth 22 itself into the retracted position. The mode of operation is clear from Figs 2 and 3. When the oscillating lever 7 is attracted magnetically against the magnetic element 10, at the same time as displacement of the cursor 17 for manual switching in accordance with Fig. 3, the tooth 22 overcomes the projection 307, engaging inside the recess 207. In this way, automatic switching is stably excluded and switching can be performed in an exclusively manual manner by means of the lever 4. The initial condition (Fig. 1) is restored only when the brightness detected by the sensor 12 falls below the threshold level and the electromagnet is no longer activated, with the result that the oscillating lever 7 is moved away from the cursor 17 via the elastic element 9 and the engaging tooth 22 is automatically disengaged from the insertion recess 207.

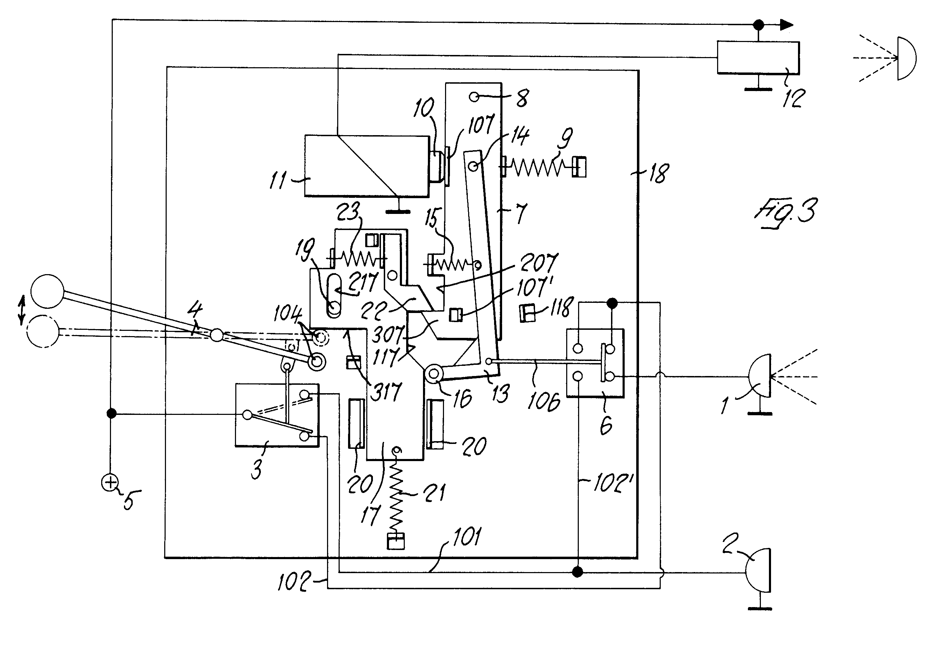

The embodiment shown in Figs 4 to 6 has a mode of operation similar to that of the preceding embodiment. This mode of operation may be obtained by means of a design of an entirely electrical nature.

The dipped beam headlights 2 are connected to the corresponding pole of the switch 3 manually operated directly by means of the power supply line 102. Two alternate power supply lines are provided for connection of the full beam headlights 1 to the switch 3: a direct line 101 and an alternate line 101' which can be connected alternately to the full beam headlights 1 and the dipped beam headlights 2 via a branch 102' of the power supply line 102 for the said headlights.

Alternate switching of the connection of the manual switch 3 to the lines 101 and 101' supplying power to the full beam headlights 1 is performed by means of a deviator channel 130 of a first automatic control relay 30, energisation and de-energisation of which are controlled by the brightness sensor 12 and by the associated threshold and power circuits which are not illustrated in detail. Switching of the alternate power supply line 101' to the full beam headlights 1 or to the dipped beam headlights 2 via the branch 102' of the power supply line 102 for the said headlights is performed by means of a deviator channel 132 of a second relay 32 for bypassing the automatic control unit , which is provided donwstream of the automatic switching relay 30.

Associated with the deviator channels 130 and 132 of the automatic switching relay 30 and the relay 32 for bypassing automatic switching are two further breaker channels 230, 232 which are connected in series to one another in a triggering and self-excitation line 33 of the relay 32 by means of which the control input of the relay 32 is connected directly to the power source 5. The breaker channel 230 of the relay 30 is arranged downstream of the breaker channel 232 of the relay 32, with reference to the direction of flow of the energising current of the said relay 32, and between the said two breaker channels 230, 232 the triggering and self-excitation line 33 is connected via a triggering branch 133, with a diode 31, to the power supply line 102 of the dipped beam headlights 2.

When the brightness sensor 12 does not detect a light signal, the relays 30, 32 are in the de-energised condition. Switching of the full beam headlights 1 to the dipped beam headlights 2 is performed manually by means of the switch 3. The switching conditions of the said relays 30, 32 are such that the full beam headlights 1 are connected to the corresponding pole of the switch 3 via the power supply line 101 and the first deviator stage 130 of the relay 3 [sic], the dipped beam headlights 2 are directly connected to the associated pole of the switch 3 via the direct line 102, while both the breaker channels 230, 232 of the relays 30 and 32 provided in the triggering and self-excitation line 33 of the relay 32 are in the open condition, so that the relay 32 is de-energised and the deviator channel is in the position for switching of the alternate power supply line 101' to the branch 102' of the power supply line 102 for the dipped beam headlights 2. Therefore, with the manual switch 3 in the position shown, the full beam headlights 1 are switched on and the dipped beam headlights 2 are switched off.

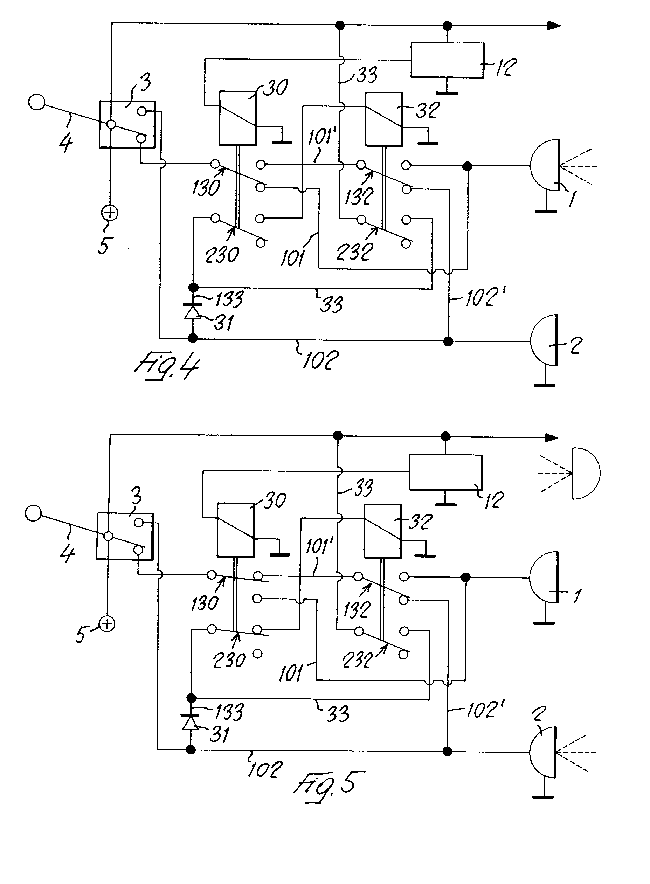

When the brightness sensor 12 detects a light signal which exceeds a predetermined threshold (Fig. 5), the relay 30 is excited, the power supply to the full beam headlights 1 is switched by the deviator channel 130 to the alternate line 101' which nevertheless remains connected to the branch 102' of the power supply line 102 of the dipped beam headlights 2. Therefore the dipped beam headlights 2 are automatically switched on and the full beam headlights 1 switched off. At the same time as switching of the deviator channel 130 of the relay 30, the breaker channel 230 of the said relay is closed so that the control input of the relay 32 is connected by means of the triggering branch 133 to the power supply line 102 of the dipped beam headlights 2, upstream of the branch 102', so that the relay 32 nevertheless remains de-energised.

When the brightness sensor 12 no longer detects a light signal, the relay 30 is de-energised and assumes again the switching conditions shown in Fig. 4, such that the dipped beam headlights 2 are automatically switched off and the full beam headlights 1 switched on again.

With reference to Fig. 6, when, following detection of a light signal by the brightness sensor 12, manual switching of the switch 3 is performed, for example in order to flash the lights, for the purposes of connecting, albeit temporarily, the power supply line 102 of the dipped beam headlights 2 to the power source 5, an excitation pulse is applied to the relay 32 via the triggering branch 133 and the closed breaker channel 230 of the relay 30. This results in switching of the deviator 132 into the condition for connection of the alternate line 101' to the full beam headlights 1 which nevertheless remain switched off for as long as the switch 3 is switched to the power supply line 102. At the same time the breaker channel 232 of the relay 32 is also closed, thereby closing the triggering and self-excitation line 33 of the said relay. The relay 32 is thus in a stable self-excited condition and switching of the full beam headlights 1 to the dipped beam headlights 2 is once again controlled by the manual switch 3, thereby making it possible to switch on the full beam headlights 1 again even when the brightness sensor detects a signal.

The self-excited condition of the relay 32 is maintained for as long as the brightness sensor 12 detects a light source. When this is not the case, the relay 30 is de-energised and at the same time as switching of the deviator channel 130 to the power supply line 101 of the full beam headlights 1, the breaker channel 230 in the triggering and self-excitation line 33 is opened so that the rest condition shown in Fig. 4 is restored.

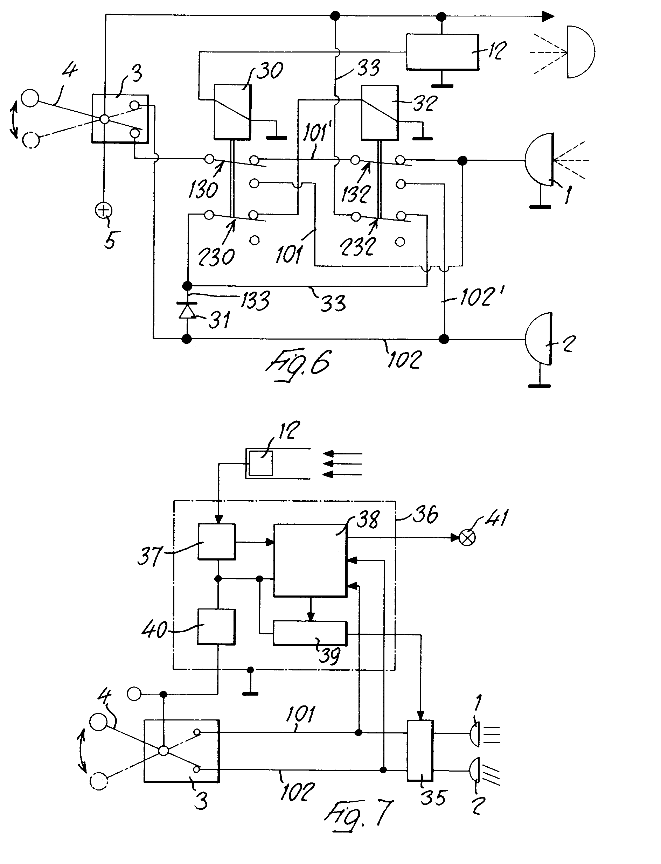

Fig. 7 shows the block diagram of an electronic embodiment of the device according to the invention. In this case also, the mode of operation is similar to that described previously. Two power supply lines 101, 102 for full beam headlights 1 and dipped beam headlights 2 are provided, being connected to the respective poles of the manual switch 3 operated by the actuating lever 4. The power supply lines 101, 102 are connected to a drivable switch 35, for example of the electronic or relay type. The drivable switch 35 is further actuated by the brightness sensor 12 via a central control unit 36 which comprises:
a comparator, trigger and amplifier stage 37 to which the output of the sensor of 12 is connected and which generates an automatic activation signal when the signal supplied by the brightness sensor 12 exceeds a given threshold which can be preset;
a processing and storage logic unit 38, for example of the microprocessor type or the like, which receives at its input the activation signal of the stage 37 and the voltages applied to the power supply lines 101, 102 and which outputs a signal for actuating the drivable switch 35, which signal is conveyed to the said switch directly or after amplification by a power stage 39.

The stages 37, 39 and the unit 38 are supplied with power by means of a stabiliser 40 using the power supply circuit of the parking lights. In this embodiment, as also in the preceding embodiments, it is also possible to provide an indicator lamp 41 which indicates that the automatic switching system is activated.

## Claims

1. Device for switching full beam headlights to dipped beam, in particular for motor vehicles or the like, in which there is provided a manual switching unit with a switch (3) which connects an electric power source (5) alternately to a power supply line (101) for the full beam headlights (1) and to a power supply line (102) for the dipped beam headlights (2), characterised in that it further comprises an automatic switching unit consisting of:
- directional brightness sensors (12) oriented towards the vehicles travelling in the opposite direction and supplying an electrical signal related to the brightness detected;
- means (11; 36, 37, 38, 39) for processing the signal generated by the brightness sensors (12) and means (10, 7, 13, 106; 38, 39) for actuating additional switching means (6; 30, 32; 35) which deviate the electric power supply alternately from the power supply line (101, 101') of the full beam headlights (1) to that (102) of the dipped beam headlights (2) and vice versa, when a light source of predetermined brightness strikes or does not strike the directional brightness sensor (12), respectively.

2. Device according to Claim 1, characterised in that means (7, 13, 17, 22; 30, 230, 32, 232, 33; 38) are provided for coupling the two switching units together, the said means being designed so as to exclude or bypass the automatic switching unit when the manual unit or associated manually actuated switch (3) is operated, both before and after the automatic unit itself is activated for switching over from full beam headlights (1) to dipped beam headlights (2).

3. Device according to Claim 2, characterised in that the switching means (6; 30, 32; 35) of the automatic switching unit may be operated alternately both by the processing and actuating means (11, 12; 37, 38) of the said unit and by the manual operating means (3, 4) of the manual unit.

4. Device according to one or more of the preceding claims, characterised in that the processing means (11; 36, 37, 38, 39) and actuating means (10, 7, 13, 106; 38, 39) of the automatic switching unit and the means (7, 13, 17, 22; 30, 230, 32, 232, 33; 38) for coupling the said unit to the manual unit may be for example of the electronic, electrical or electromechanical type.

5. Device according to Claim 4, characterised in that the automatic switching unit comprises a pushbutton type switch (6) which is actuated by means of an actuating rod (106) and which alternately connects the power supply line (101) of the full beam headlights (1) to the said headlights and to a branch (102') of the power supply line (102) for the dipped beams headlights (2), the actuating rod (106) being connected to a thrusting/pulling element (7) which can be displaced in the sliding direction of the said rod and which is subjected on one side to the action of elastic means (9), so as to press the rod into the position of the switch (6) which connects the power supply line (101) of the full beam headlights (1) to the said headlights, and on the other side to the attractive force of an electromagnet (10) actuated by the brightness sensor (12) via a processing and power circuit (11), for displacement against the action of the spring (9), so as to pull the rod (106) into the position of the switch (6) which connects the power supply line (101) of the full beam headlights (1) to the branch (102') of the power supply line (102) for the dipped beam headlights (102).

6. Device according to Claim 5, characterised in that the actuating rod (106) is hinged with a further thrusting element (13) which is mounted displaceably, against an elastic return force (15) on the thrusting/pulling element (7), so as to press the actuating rod (106) from the position of the automatically operated switch (6) connecting the power supply line (101) of the full beam headlights (1) to the branch (102') of the power supply line (102) for the dipped beam headlights, into the position connecting the power supply line (101) for the full beam headlights (1) to the said headlights, which pressing element (13) is made to cooperate with a cam (117) solely in the condition where the thrusting/pulling element (7) is attracted against the electromagnet (10) and which cam (117) is actuated so as to displace the thrusting element (13) against the said elastic return means (15) by manual control means (4) of the manually operated switch (3).

7. Device according to Claim 6, characterised in that the cam (117) and the thrusting/pulling element (7) are provided with automatic mutually removable locking means which engage with each other in the condition where the thrusting/pulling element (7) is attracted against the electromagnet (10) and the cam (117) is displaced into the position for activation of the thrust element (13) of the actuating rod (106), while they are released from one another at the same time as the thrusting/pulling element (7) is moved away from the electromagnet (10).

8. Device according to one or more of the preceding claims, characterised in that the thrusting/pulling element (7) consists of a lever oscillating in the sliding direction of the actuating rod (106), while the thrusting element (13) consists of a further oscillating lever pivotably connected to the first oscillating lever (7) and provided with a transverse extension cooperating by means of a roller (16) with a linear cam (117) provided on a cursor (17), which cursor is slidably actuated against the action of a return spring (21) by the manual control lever (4) of the manually operated switch (3) and has mounted on it an elastically yielding engaging tooth (22) which cooperates with an insertion recess (207) in the first oscillating lever (7) when it is attracted against the electromagnet (10).

9. Device according to Claim 4, characterised in that it comprises a direct power supply line (101) and an alternate power supply line (101') for the full beam headlights (1) which can be connected alternately to the corresponding pole of the manually operated switch (3) by means of a first switching stage (130) of an automatic switching relay (30) actuated by the brightness sensor (12), while the alternate line (101') can be connected alternately to the full beam headlights (1) or to a branch (102') of the power supply line (102) for the dipped beam headlights (2) by means of a switching stage (132) of a second bypass relay (32), which second bypass relay (32) is directly actuated by the power source (5) or by the power supply line (102) of the dipped beam headlights (2) via a triggering and self-excitation line (33), in which there are provided, in the direction of flow of the current, a first breaker consisting of a switching stage (232) of the bypass relay itself (32) and a second breaker consisting of a switching stage (230) of the first automatic switching relay (30), the triggering and self-excitation line (33) being connected to the power supply line (102) of the dipped beam headlights (2) at an intermediate point between the breakers (232, 230) via a diode (31) provided in a branch (133), and being in the condition for de-energisation of the automatic switching relay (30) and bypass relay (32), the switching stage (130) of the first relay (30) being in the condition for connection of the direct power supply line (101) of the full beam headlights (1) to the manually operated switch (3) and the switching stage (230) of the said relay in the position for opening of the triggering and self-excitation line (33), while the switching stage (232) of the second bypass relay (32) is in the condition for connection of the alternate power supply line (101') of the full beam headlights (1) to the branch (102') of the power supply line (102) for the dipped beam headlights (2) and the switching stage (232) of the said relay is also in the condition for opening of the triggering and self-excitation line (33).

10. Device according to Claim 4, characterised in that it comprises a processing and storage logic unit (38), for example of the microprocessor type, with a command output for a power stage (39) of an automatically operated switch (35), for example of the semiconductor type or the like, provided downstream of the manually operated switch (3) in the power supply lines (101, 102) of the full beam and dipped beam headlights (1, 2), and with an input for an activation signal supplied by a comparator and trigger stage (37) to which the directional brightness sensor (12) is connected, as well as with an input for measuring the voltage for each power supply line (101, 102) of the full beam and dipped beam headlights (1, 2) upstream of the automatically operated switch (35), the logic unit (38) being programmed so as to exclude automatic control of the automatically operated switch (35) upon operation of the manual switch (3) when the said automatically operated switch (35) has been activated for manual switching of the full beam headlights (1) to dipped beam headlights (2).
